(19) Europäisches Patentamt
European Patent Office
Office européen des brevets

(11) **EP 4 246 087 B1**

(12) **EUROPEAN PATENT SPECIFICATION**

(45) Date of publication and mention
of the grant of the patent:
**23.10.2024 Bulletin 2024/43**

(21) Application number: **22162847.2**

(22) Date of filing: **17.03.2022**

(51) International Patent Classification (IPC):
***G01B 11/24*** *(2006.01)*

(52) Cooperative Patent Classification (CPC):
**G01B 11/24**

(54) **METHOD AND DEVICE FOR CHARACTERIZING A SURFACE OF AN OBJECT**

VERFAHREN UND VORRICHTUNG ZUM CHARAKTERISIEREN EINER OBERFLÄCHE EINES OBJEKTES

PROCÉDÉ ET DISPOSITIF DE CARACTÉRISATION D'UNE SURFACE D'UN OBJET

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**20.09.2023 Bulletin 2023/38**

(73) Proprietor: **Technische Hochschule Deggendorf
94469 Deggendorf (DE)**

(72) Inventor: **WAGNER, Michael
Regen (DE)**

(74) Representative: **Tautz & Schuhmacher
Nibelungenstraße 84
80639 München (DE)**

(56) References cited:
**JP-A- 2020 180 918      US-A- 5 991 034
US-A1- 2017 016 832      US-B2- 10 436 571
US-B2- 9 152 844**

## Description

Provided are a method and a device for characterizing a surface of an object. The embodiments are, thus, related to techniques for measuring the surface profile of an object.

Document US 2017/016832 A1 describes a surface property indexing apparatus which includes a measurement device that generates a plurality of captured images by capturing images of reflected light of illumination light on a surface of the measured object while selecting its wavelength, and an arithmetic processing apparatus that indexes a surface property of the measured object on the basis of the obtained captured images. The captured images are of the same wavelength of the reflected light that forms images in an image capturing device, and is of different reflection angles of the reflected light that forms images in the image capturing device in the direction corresponding to the longitudinal direction of the measured object in the captured image. The arithmetic processing apparatus reconstructs the generated captured images to generate a plurality of processing target images having a common wavelength of the reflected light and a common reflection angle of the reflected light and composed of pixels corresponding to the different view field positions of the measured object, and indexes the surface property of the measured object on the basis of the generated processing target images.

Document US 5 991 034 A describes an interferometer which can vary a direction of an incident beam and which enables more accurate measurement while avoiding eclipse includes an optical system adapted to form an interference beam from a beam from a surface to be measured, and a detected position varying member for varying a position to be detected of the interference beam in accordance with information on inclination of the surface to be measured.

Optical measurement devices are widely used for measuring the surface profile of objects and in particular for determining possible discrepancies between the actual surface profile and the intended surface profile of an object under investigation. For some objects, a high degree of precision is desired, for instance for determining the quality of the surface of optical elements, such as optical lenses, mirrors and/or prisms. In case, a discrepancy between the actual and the intended shape and/or surface profile is determined, the respective object may undergo a post-treatment, such as a further polishing treatment, to reduce the discrepancy and/or to align the actual shape and/or surface to the intended shape and/or surface. Interferometric techniques are often used for measuring the surface profile of objects, in particular of objects having a plane or spherical surface.

For measuring the surface profile of objects having a non-plane surface, such as free-form objects or aspherical lenses, the efforts are unlike higher. In some cases interferometric devices of different kinds may be used, such as Fizeau interferometers with computer generated holograms, stitching interferometry, and tilted wave interferometry. In other cases Shack-Hartmann sensors may be used for determining a wavefront to characterize the surface of the object. Other techniques may use 3D profilometers having optical or tactile measuring heads.

Another kind of measuring device for measuring a wavefront and characterizing the surface profile of an object based on an angular selective optical element is described in the document DE 102011076946 A1. This technique overcomes several disadvantages of other techniques mentioned further above and is adjustable to various different shapes of the surface to be measured.

However, these commonly used techniques and devices often require a high degree of complexity and come along with significant manufacturing costs for the respective measurement devices. Moreover, these techniques often require a high skill level and training effort to enable an operator to use such devices.

In the light of this state of the art, one of the objects of the present disclosure is to provide a method and a device being configured to overcome the above-described disadvantages of the state of the art, respectively.

This problem is solved by a method and a device having the features of the respective independent claim. Optional features are described in the dependent claims and in the description.

In one aspect a method for characterizing a surface of an object is provided. The method comprises illuminating the surface of the object with a predetermined illumination light, wherein the illumination light comprises a predetermined angular distribution of collimated light waves. The method further comprises collecting the light waves reflected off the surface with an imaging assembly, and consecutively isolating collimated light waves having different angular ranges from the light waves reflected off the surface. Moreover, the method comprises detecting the isolated light waves and providing detector signal data for each of the consecutively isolated light waves with a detector arranged at a detecting distance from the imaging assembly. The method further comprises deriving a surface profile of the surface based on the detector signal data and the respective different angular ranges of the consecutively isolated collimated light waves.

In another aspect a device for characterizing a surface of an object is provided. The device comprises an illumination light source adapted to illuminate the surface of the object with a predetermined illumination light, wherein the illumination light comprises a predetermined angular distribution of collimated light waves. The device further comprises an imaging assembly adapted to collect the light waves reflected off the surface. Moreover, the device comprises means for consecutively isolating collimated light waves having different angular ranges from the light waves reflected off the object, and a detector arranged at a detecting distance from the imaging assembly, wherein the detector is adapted to detect the isolated light waves and to provide detector signal data for each of the consecutively isolated light waves. In addition, the device comprises a control unit adapted to derive a surface profile of the surface based on the detector signal data and the respective different angular ranges of the consecutively isolated collimated light waves.

In another aspect a method for characterizing a wavefront of a light wave reflected from a surface of an object is provided. The method comprises providing an imaging assembly comprising a first lens having a first focal length and a second lens having a second focal length, wherein the first lens and the second lens share a common focal plane within the imaging assembly. The method further comprises providing a pinhole aperture arranged in a pinhole plane, wherein the pinhole plane is overlapping with or adjacent to the common focal plane. Moreover, the method comprises arranging the imaging assembly at a working distance of the first lens from the object essentially corresponding to the first focal length and collecting the light wave emitted and/or reflected from the object. In addition the method comprises arranging the pinhole aperture consecutively at multiple predetermined positions in the pinhole plane, and detecting the light wave collected by the imaging assembly and providing detector signal data for each of the consecutive positions of the pinhole aperture in the pinhole plane with a detector arranged at a detecting distance from the second lens essentially corresponding to the second focal length. The method further comprises deriving the wavefront of the light wave reflected from the surface of the object based on the detector signal data and the corresponding predetermined positions of the pinhole aperture in the pinhole plane.

In another aspect a device for characterizing a surface of an object is provided. The device comprises an imaging assembly comprising a first lens having a first focal length and a second lens having a second focal length, wherein the first lens and the second lens share a common focal plane within the imaging assembly and wherein the imaging assembly is adapted to collect a light wave reflected from the object at a working distance of the first lens from the object essentially corresponding to the first focal length. The device further comprises a pinhole aperture arranged in a pinhole plane, wherein the pinhole plane is parallel to the common focal plane of the first lens and the second lens and overlapping with or adjacent to the common focal plane, wherein the pinhole aperture is arrangeable at multiple predetermined positions in the pinhole plane. Moreover, the device comprises a detector arranged at a detecting distance from the second lens essentially corresponding to the second focal length, wherein the detector is configured to detect the light wave collected by the imaging assembly and to provide detector signal data. In addition, the device comprises a control unit configured to arrange the pinhole aperture consecutively at multiple predetermined positions in the pinhole plane, to receive the detector signal data for each of the consecutive positions of the pinhole aperture in the pinhole plane, and to derive the wavefront of the light wave emitted and/or reflected from the object based on the detector signal data and the corresponding predetermined positions of the pinhole aperture in the pinhole plane.

The device may be configured to carry out the method. Therefore, the description given with respect to the method applies mutatis mutandis to the device and vice versa.

Characterizing the surface of an object means that a surface profile of the surface is determined. This may include determining a spatially resolved angular distribution of the surface, i.e. a local slope of the surface, and/or a spatially resolved height profile of the surface.

A predetermined angular distribution of collimated light waves means that the illumination light may be described as a superposition of multiple collimated waves having different wave vectors, wherein the wave vectors have a predetermined angular distribution. In particular, the illumination light may have a specific predetermined relation of its intensity and its wave vector or propagation direction. Likewise, the illumination light source may have a specific predetermined relation of its emission intensity and its emission angle. This may be achieved for instance by an angular selective optical element, such as an optical interference filter. The relation of the intensity relative to the wave vector and/or the propagation direction may follow a predetermined mathematical function, such as for instance a Gaussian curve having its maximum at an angle of 0° with respect to the optical axis of the illumination light source. The mathematical function or any other defined relation of the intensity relative to the wave vector or the propagation direction may be used for deriving the surface profile of the surface based on the different angular ranges of the consecutively isolated collimated light waves.

Isolating collimated light waves having different angular ranges means that out of the collimated light waves of the predetermined angular distribution only a subset of collimated light having wave vectors within a particular angular range is selected. The isolation may be carried out by transmitting only the collimated light wave having the specified angular range and blocking or reflecting the remaining collimated light waves. "Consecutively isolating" means that the light waves having different angular ranges are isolated in a sequential manner, i.e. one after the other.

The control unit may comprise a computing unit. For instance, the control unit may comprise a processing unit, such as a CPU, and a memory for storing program code and/or program data. For example, the control unit may consist of or comprise a microcontroller, a personal computer, a mobile phone, and/or a tablet computer. The control unit may be connected via a data communication connection with the detector and optionally with an illumination light source and/or a moving device for arranging the pinhole aperture within the pinhole plane. Moreover, the control unit may be connected with or may comprise one or more interfaces for communicating with an operator, such as a display for providing visual information and/or speakers for providing acoustic information to an operator, and/or a keyboard and/or a computer mouse and/or any other input device for receiving commands and/or information from the operator.

The disclosure provides the advantage that a method and a device are provided allowing a facilitated measurement of a surface profile of a surface of an object. The requirements for an operator to carry out the method are moderate and, hence, the method may be used by a wide range of operators without a need of extensive technical skills and training.

Moreover, the disclosure provides the advantage that the device for characterizing (e.g., measuring) surface profiles of objects can be manufactured with moderate effort and without the need of expensive optical and non-optical components. Consequently, the disclosure allows providing the device at low cost and hence to apply such techniques in cost sensitive fields, which have no access to such measurements with conventional devices and techniques.

The predetermined angular distribution of collimated light waves of the illumination light may have its maximum intensity at a propagation angle parallel to an optical axis of an illumination light source. This specified angular distribution may be considered when deriving the surface profile.

The imaging assembly may be adapted to image the surface of the object to the detector. This may allow characterizing the surface profile at a high spatial resolution.

The method may be adapted such that the imaging assembly comprises or is configured as an imaging lens assembly with a first lens having a first focal length and a second lens having a second focal length, wherein the first lens and the second lens share a common focal plane within the imaging lens assembly. Moreover, the method may be adapted such that a pinhole aperture is provided for consecutively isolating the collimated light waves having different angular ranges from the light waves reflected off the surface, wherein the pinhole aperture is arranged in a pinhole plane. The pinhole plane is overlapping with or adjacent to the common focal plane. The method may be further adapted such that the imaging assembly is arranged at a working distance of the first lens from the surface of the object essentially corresponding to the first focal length to collect the light waves reflected off the object. The step of consecutively isolating the collimated light waves having different angular ranges from the light waves reflected off the surface may comprise arranging the pinhole aperture consecutively at multiple predetermined positions in the pinhole plane, wherein each of the predetermined pinhole positions corresponds to one of the isolated collimated light waves having different angular ranges.

Accordingly, the device may be adapted such that the imaging assembly comprises or is configured as an imaging lens assembly with a first lens having a first focal length and a second lens having a second focal length, wherein the first lens and the second lens share a common focal plane within the imaging lens assembly and wherein the imaging lens assembly is adapted to collect light waves reflected off the surface at a working distance of the first lens from the object essentially corresponding to the first focal length. Moreover, the means for consecutively isolating collimated light waves having different angular ranges may comprise a pinhole aperture arranged in a pinhole plane, wherein the pinhole plane is overlapping with or adjacent to the common focal plane. The pinhole aperture is arrangeable at multiple predetermined positions in the pinhole plane, wherein each of the predetermined positions corresponds to a predetermined angular range of one of the isolated collimated light waves. The detector may be arranged at a detecting distance from the second lens essentially corresponding to the second focal length, wherein the detector is configured to detect the light wave collected by the imaging lens assembly and to provide detector signal data. The control unit may be configured to arrange the pinhole aperture consecutively at multiple predetermined positions in the pinhole plane, to receive the detector signal data for each of the consecutive positions of the pinhole aperture in the pinhole plane, and to derive a surface profile of the surface based on the detector signal data and the corresponding predetermined positions of the pinhole aperture in the pinhole plane.

In general, characterizing a surface may include characterizing a wavefront of a light wave reflected off said surface. Characterizing a wavefront of a light wave means that the wavefront of the light wave is measured and/or that information about a spatial distribution of a direction of the wave vector of the light wave is retrieved. Determining a wavefront may, thus, serve the purpose of retrieving information about a surface of an object reflecting said light wave. The wavefront being reflected off the object means that the wavefront characterizes a light wave propagating from the object after being reflected at the object. Likewise, a wavefront of a light wave transmitted through an object and in particular a surface of the object can be characterized for characterizing the surface of the object. The object may be illuminated with a light wave provided by an external light source, i.e. an illumination light source, such that the light wave having the wavefront to be determined is reflected at and/or transmitted through the surface of the object.

The first lens and the second lens sharing a common focal plane within the imaging lens assembly means that the first lens and the second lens are arranged on a common optical axis such that a distance between the first lens and the second lens equals the sum of the first focal length and the second focal length. The imaging lens assembly may be formed as a fixed assembly of the first lens and the second lens and may comprise further optical and/or non-optical elements, such as a housing.

The pinhole aperture is an aperture transmitting light waves propagating through the opening of the pinhole aperture and blocking, absorbing, reflecting and/or scattering light waves impinging on the pinhole aperture beyond the opening of the aperture. For instance, the pinhole aperture may comprise or be provided as a hole provided in an opaque element, such as a metal plate, which is capable of effectively blocking impinging light waves. The pinhole plane is a plane, in which a transversal extension of the pinhole aperture extends. The pinhole plane may be perpendicular to an optical axis of the pinhole aperture. The pinhole plane may be perpendicular to the optical axis of the imaging lens assembly, i.e. the optical axes of the first lens and the second lens. In other words, the pinhole plane may be parallel to the common focal plane of the first lens and the second lens. Alternatively, the pinhole plane may be tilted with respect to the common focal plane, such as by an angle in the range of $\pm 10°$ or less. The pinhole plane may overlap and be identical to the common focal plane or may be adjacent to the common focal plane. Adjacent to the common focal plane means that a distance between the common focal plane and the pinhole plane is not more than 20% of the shorter focal length of the first focal length and the second focal length.

A working distance of the imaging lens assembly and/or imaging assembly from the object is a distance suitable and/or recommended for the use of the imaging lens assembly and/or imaging assembly for determining the wavefront of the light wave emitted and/or reflected from the object. When using a telecentric imaging lens assembly, the working distance may essentially correspond to the first focal length. The working distance essentially corresponding to the first focal length means that a possible deviation of the working distance from the first focal length is not more than 10% of the first focal length. Likewise, the detector being arranged from the imaging lens assembly at a distance from the second lens essentially corresponding to the second focal length, which is referred to as the detecting distance, means that a possible deviation of the distance from the second focal length is not more than 10% of the second focal length.

The illumination light may be configured to illuminate at least the area of the surface of the object, which is to be characterized. Optionally the illumination light may exhibit a plane wavefront and/or a continuum of plane waveforms having a continuum of different propagation angles. Alternatively or additionally the illumination light may have a predetermined wavefront, which is well characterized in order to allow retrieving alterations of the wavefront imposed by a reflection of the illumination light off the surface of the object under investigation. For instance, the illumination light may be provided by an illumination light source which may comprise a collimator lens assembly collimating at least partly the illumination light waves. Alternatively or additionally the illumination light may propagate through an angular-selective optical element having a predetermined angular transmission profile in order to provide the illumination light impinging at a predetermined and optionally well characterized angular distribution onto the surface of the object. Hence, the illumination light may comprise a predetermined angular distribution of collimated light waves. Such an angular-selective optical element may for instance comprise or consist of one or more metal interference filters (MIF). Alternatively or additionally, the angular-selective optical element may comprise or consist of one or more dielectric mirrors. The illumination light wave may have a size and a shape that are suitable for entirely and simultaneously illuminating the surface of the object or at least the part of the surface that is to be characterized. For achieving this, the illumination light source may have a lateral extension being at least similar or larger than the (part of the) surface of the object to be characterized. Accordingly, the device may further comprise an illumination light source adapted to provide collimated light waves having a predetermined angular distribution for illuminating at least the surface of the object to be characterized.

The illumination light source may have a transversal extension, i.e. an extension in the dimensions perpendicular to the emission direction, which is at least 20% and optionally at least 50% of the respective dimensions of the part of the surface of the object to be characterized. Optionally, the illumination light source may have a transversal extension which is of the same extension or of a larger extension than the surface of the object to be characterized. The illumination light source may offer a homogeneous brightness over its emission surface. For instance, the illumination light source may comprise an OLED panel and/or a LED panel optionally using an edge-lighting configuration and/or any other light source commonly used for providing a homogeneous lighting, such as a homogeneous background lighting for a LCD display. For instance, the illumination light source may comprise a fiber and a collimator, wherein the fiber emits a divergent light wave which is then at least partly collimated by the collimator. The collimator may have an extension in the dimensions perpendicular to the emission direction, which is at least of the same extension as the part of the surface of the object to be characterized.

A beam splitter may be provided between the illumination light source and the surface of the object to be characterized allowing an illumination of the object with illumination light emitted by the illumination light source and reflecting the light wave(s) reflected off the surface to be characterized of the object into the imaging assembly.

In particular, the illumination light source may comprise an angular-selective optical element transmitting only light waves propagating in a predetermined angular range for isolating collimated light waves having a particular angular range of the wave vectors reflected off the surface. Transmitting in this context may optionally involve one or more reflections off an angular-selective mirror. The illumination light source, thus, provides light waves comprising a continuum of plane wavefronts having a predetermined angular distribution. In an optional embodiment, the continuum of plane light waves may be centered regarding its propagation direction at an optical axis of the illumination light source perpendicular to an emission surface which may be perpendicular to the surface to be characterized of the object.

The detector may comprise a two-dimensional pixel array with multiple pixels. This allows measuring the surface profile of the object with a spatial resolution defined by the pixel density of the pixel array and the ratio between the area of the measured surface and the image surface at the detector. Accordingly, the detector signal data may comprise a detected signal intensity for at least some and optionally for all of the pixels of the two-dimensional pixel array. Thus, each pixel of the pixel array may provide the detector signal data regarding a small portion of the surface of the object to be measured. In particular, the two-dimensional pixel array may be or comprise a CCD array and/or a CMOS array.

Deriving, i.e. characterizing, a surface profile of the surface of the object may comprise determining for each of the pixels of the two-dimensional pixel array the one position out of the multiple positions of the pinhole aperture in the pinhole plane resulting in the maximum detected signal intensity for the respective pixel. Accordingly, the pinhole aperture may be arranged consecutively at multiple different positions in the pinhole plane and transmitting only a small part of the light wave propagating in the imaging assembly, wherein the transmitted part of the light wave depends on the position of the pinhole aperture in the pinhole plane. Each of the multiple positions of the pinhole aperture in the pinhole plane corresponds to a specific angle or angular range of the light wave entering the imaging assembly, as only a light wave entering the imaging assembly under this specific angle or angular range propagates through the position of the pinhole aperture in the pinhole plane which is transmitted by the pinhole aperture. Consequently, arranging the pinhole aperture at specific predetermined positions in the pinhole plane allows selectively isolating light waves entering the imaging assembly at a specific and predetermined angle or angular range correlated with the position of the pinhole aperture in the pinhole plane.

For a surface of the object to be characterized being a non-flat surface, off which the illumination light is reflected, the light wave will propagate into different directions, depending on the angle or slope of the surface at different parts of the surface. The term "non-flat surface" means that the averaged shape of the surface to be characterized is not a plane but any other shape differing from a plane. For instance, a non-flat surface may be a spherical, cylindrical, parabolic or a nonspherical free-form surface. The reflection angle depends on the angle of incidence of the illumination light with respect to the actual surface normal at the position, at which the light hits the surface to be characterized. Hence, for different parts of the surface having different angles, the emitted and/or reflected light wave will propagate through different positions in the pinhole plane before impinging on the detector after passing the imaging assembly at the pixel being correlated with the part of the surface, which emitted and/or reflected the part of the light wave. Hence, by arranging the pinhole aperture at different positions in the pinhole plane, different parts of the light wave propagating through different positions in the pinhole plane may be selected and isolated, while other parts of the light waves may be blocked by the pinhole aperture. When determining the wave front of a light wave reflected off the surface of the object, the surface of the object may be illuminated by illumination light provided with a specific and predetermined angular distribution, which may be achieved by an angular-selective optical filer element. Consequently, the different parts of the surface will generate the maximum signal intensity at the respective pixel at the detector when the pinhole aperture is arranged at different positions in the pinhole plane, depending on the angle or slope of the surface to be characterized at the respective position of the surface. This angular resolution achieved by arranging the pinhole aperture in different positions in the pinhole plane may be used for sampling the angular distribution of the light wave, which corresponds to the shape of its wavefront, emitted and/or reflected from the surface. In particular, this may be achieved by simply arranging the pinhole aperture consecutively in different positions in the pinhole plane and retrieving from the detector for each measurement at each position respective signal data, to determine which pixel and accordingly which correlated part of the surface exhibits its maximum signal strength at the respective position of the pinhole aperture. Accordingly, the method may comprise deriving for each of the pixels an angle or angular range of the wavefront of the light wave emitted from the object at a position corresponding to the respective pixel and/or an angle of the surface of the object at the position corresponding to the respective pixel defined by the position of the pinhole aperture in the pinhole plane resulting in the maximum detected signal intensity for the respective pixel.

Recording and evaluating the detector signal data may be carried out simultaneously for all pixels. This has the benefit that only one scan of the pinhole aperture through all predetermined positions in the pinhole plane may be sufficient for characterizing the wavefront and, thus, the surface to be characterized. Accordingly, the step of determining for each of the pixels the one position out of the multiple positions of the pinhole aperture in the pinhole plane resulting in the maximum detected signal intensity for the respective pixel and the step of deriving for each of the pixels an angle or angular range of the light wave emitted and/or reflected from the object at a position corresponding to the respective pixel and/or an angle of the surface of the object at the position corresponding to the respective pixel defined by the position of the pinhole aperture in the pinhole plane resulting in the maximum detected signal intensity for the respective pixel may be carried out simultaneously.

The imaging assembly may comprise an imaging lens assembly, which may comprise or consist of a telecentric lens assembly. In particular, the imaging lens assembly may satisfy the condition of bilateral telecentricity. This may require introducing an aperture at the common focal plane of both lenses and arranging the imaging lens assembly such that a working distance of the first lens from the object to be measured is equal or close to the first focal length. A telecentric lens assembly provides the advantage that the light wave collected by the image lens assembly has a large beam waist within the imaging lens assembly and in particular in the pinhole plane within the imaging lens assembly. The beam waist may depend on the numerical aperture of the image lens assembly. This allows sampling the wave front of the light wave with the pinhole aperture in the pinhole plane with a high resolution, which translates in a high angular resolution of the obtained measurement.

The extension of an opening of the pinhole aperture in a direction within the pinhole plane may be in a range from 1 $\mu$m to 1 mm. This may provide a sufficient angular resolution of the obtained measurement combined with the light wave transmitted through the pinhole aperture being suitable for a sufficient signal-to-noise ratio of the detector signal data. Said opening may have for instance a round, elliptic, or polygonal shape. A round cross-sectional shape of the opening of the pinhole aperture may be beneficial for avoiding undesired distortions of the transmitted part of the wavefront.

The first lens of the imaging lens assembly may have an aperture of at least 50 mm and/or not more than 500 mm. In particular when using a telecentric imaging lens assembly, the aperture of the first lens of the imaging lens assembly may be equal to or larger than the area of the surface of the object to be measured simultaneously. Hence, a larger aperture of the first lens may offer a larger measurement area, which can be covered by the measurement.

Alternatively or additionally to moving a pinhole aperture to multiple predetermined positions in the pinhole plane, the step of consecutively isolating collimated light waves having different angular ranges from the light waves reflected off the surface may comprise rotating and/or turning the object with respect to the imaging assembly. This may be achieved by using a movable and/or rotatable mechanical support for the object.

Alternatively or additionally the consecutively isolating the collimated light waves having different angular ranges may comprise varying the predetermined angular distribution of the collimated light waves of the illumination light, such that an angle of a maximum intensity of the illumination light is varied. This may for instance be achieved by tilting an angular selective optical element.

Alternatively or additionally the consecutively isolating the collimated light waves having different angular ranges may comprise varying a position of an illumination light source providing the illumination light with respect to the surface. This may be achieved by using a movable mechanical support for the illumination light source.

Alternatively or additionally the consecutively isolating the collimated light waves having different angular ranges may comprise varying a position of the imaging assembly with respect to the surface. This may be achieved by using a movable mechanical support for the imaging assembly.

Alternatively or additionally the consecutively isolating the collimated light waves having different angular ranges may comprise varying a position and/or an orientation of an optical component guiding the illumination light source onto the surface with respect to the surface. This may be achieved by moving a beam splitter arranged between the illumination light source and the object.

Accordingly, the means for consecutively isolating collimated light having different angular ranges from the light waves reflected off the object may comprise a device for rotating and/or turning the object with respect to the imaging assembly, and/or varying the predetermined angular distribution of the collimated light waves of the illumination light, such that an angle of a maximum intensity of the illumination light is varied, such as by varying an angular orientation of an angular selective optical element. Alternatively or additionally the device may comprise a device for varying a position of an illumination light source providing the illumination light with respect to the surface, and/or a device for varying a position of the imaging assembly with respect to the surface, and/or a device for varying a position and/or an orientation of an optical component guiding the illumination light source onto the surface, such as a beam splitter, with respect to the surface.

It is understood by a person skilled in the art that the above-described features and the features in the following description and figures are not only disclosed in the explicitly disclosed embodiments and combinations, but that also other technically feasible combinations as well as the isolated features are comprised by the disclosure. In the following, several optional embodiments and specific examples are described with reference to the figures for illustrating the disclosure without limiting the disclosure to the described embodiments.

Further optional embodiments and features will be illustrated in the following with reference to the drawings.

Figure 1 shows a device for characterizing a surface of an object according to an optional embodiment.

Figures 2A to 2F illustrate the working principle of the device and a method for characterizing a surface of an object according to an optional embodiment.

Figures 3A to 3K schematically illustrate an optional pattern of positions of the pinhole aperture in the pinhole plane and resulting detector signal data for a pixel of the detector and an exemplary process for characterizing a surface.

In the drawings the same reference signs are used for corresponding or similar features in different drawings.

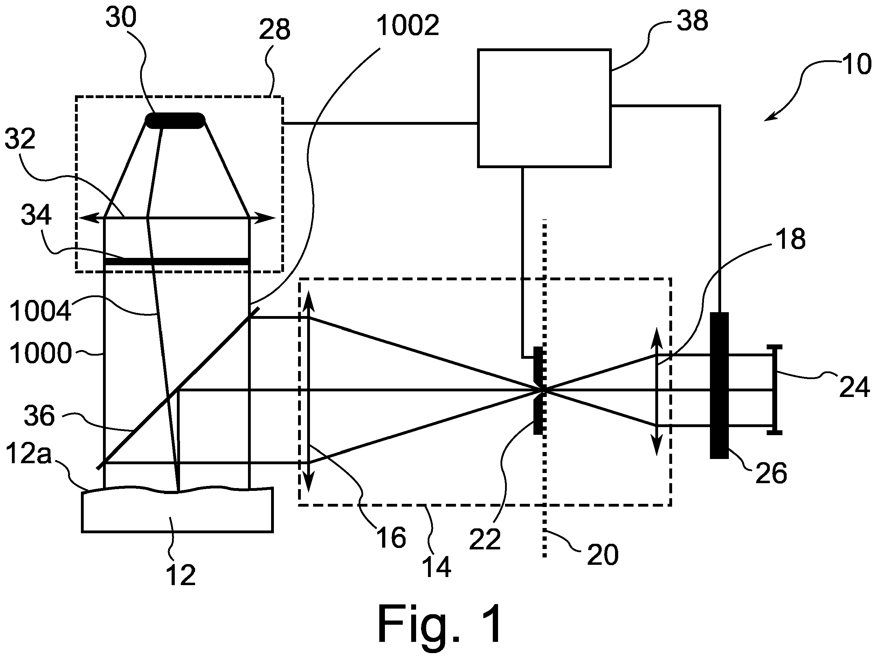

Figure 1 depicts in a schematic view a device 10 according to an optional embodiment for characterizing a surface 12a of an object 12.

The device 10 comprises an imaging assembly 14, which is configured as an imaging lens assembly comprising a first lens 16 having a first focal length and a second lens 18 having a second focal length. The imaging assembly 14 may be provided as a closed assembly integrating all parts in a common housing, as indicated by the dashed frame. Alternatively, the imaging assembly 14 may be set up by individual components being separate from each other. The first lens 16 and the second lens 18 are arranged such that their optical axes are identical and such that the distance between the first lens 16 and the second lens 18 equals the sum of the first focal length and the second focal length. Accordingly, the first lens 16 and the second lens 18 share a common focal plane 20, which is indicated by a dotted line. As can be seen, the second focal length is shorter than the first focal length. According to the presented embodiment, the first lens 16 may have an aperture of 300 mm while the second lens may 18 have an aperture of about 150 mm.

The device 10 further comprises means for consecutively isolating collimated light waves having different angular ranges from the light waves reflected off the surface of the an object to be characterized. Said means comprise a pinhole aperture 22, which is arranged within the imaging assembly 14 between the first lens 16 and the second lens 18 and optionally in the common focal plane 20. According to other embodiments, the pinhole aperture 22 may be arranged apart from the common focal plane 20, for instance in a distance range of ± 20% of the second focal length from the common focal plane 20. The pinhole aperture 22 is movable within a pinhole plane and can be arranged at multiple different positions in the pinhole plane, wherein the pinhole plane may be parallel to the common focal plane 20 and may overlap with the common focal plane 20 when the pinhole aperture 22 is arranged in the common focal plane 20. However, the pinhole plane does not necessarily need be fully parallel to the common focal plane 20. Instead, the pinhole plane may be oriented to exhibit a small angle with respect to the common focal plane 20, such as for instance ±10°.

Moreover, the device 10 comprises a detector 24 arranged behind (viewed in the direction of light propagation) the imaging assembly 14, i.e. behind (viewed in the direction of light propagation) the second lens 18. The detector 24 comprises a two-dimensional array of pixels in order to detect a spatial intensity distribution of the light wave impinging on the detector 24. For example, the detector 24 may be or comprise a CCD detector and/or a CMOS detector. Between the imaging assembly 14 and the detector 24 one or more optional optical filter elements 26 may be arranged to filter and/or attenuate the light wave(s) before impinging on the detector 24.

The device 10 is adapted such that the imaging assembly 14 images the light waves reflected off an upper surface 12a of the object 12 to a detection plane of the detector 24. According to the presented embodiment, the imaging assembly 14 may be formed as a bilateral telecentric imaging assembly 14, wherein a working distance of the first lens 16 from the surface 12a of the object 12 along the optical axis (which may be deflected by one or more mirrors and/or beam splitters) of the imaging assembly 14 equals the first focal length and a distance of the detection plane of the detector 24 from the second lens 18 equals the second focal length. Hence, a light wave reflected off the surface 12a of the object 12 is at least partly collected by the imaging assembly 14 and imaged to the detector 24. When using an imaging assembly 14 having a telecentric configuration, the aperture of the first lens 16 has to be at least of the same extension as the area of the surface 12a to be measured.

In order to measure a light wave reflected off the surface 12a and, thus, to characterize a surface 12a of an object 12, an illumination light source 28 is provided for illuminating the object 12. The illumination light source 28 may comprise several components, such as an extended light emitter 30, a collimating lens assembly 32 comprising one or more optical lenses and an angular-selective optical element 34. The extended light emitter 30 offers a homogeneous emission of light over an extended area perpendicular to the emission axis, which may for instance extend over an area having at least 20% of the size of the surface area of the object 12 to be measured. For instance, the extended light emitter 30 may comprise or consist of an OLED panel and/or an edge-lighting LED panel, which may have a spatial extension perpendicular to the optical axis of the illumination light source, i.e. the emission axis, which is referred to as the emission axis, being equal to or larger than the surface of the object to be determined. Alternatively or additionally a smaller light emitter may be used in combination with a collimator lens. The light emitter may comprise an optical fiber. The collimating lens assembly 32 may be adapted to at least partly collimate the light waves emitted by the light emitter 30 towards the emission axis. The angular-selective optical element 34 has an angle-dependent transmission profile, which may follow a Gaussian function having its maximum at a 0° incidence angle. Hence, the angular-selective optical element 34 allows providing an illumination light having a predetermined angular distribution having its maximum at an angle of 0°. The illumination light may, thus, be described as a continuum of plane wavefronts having an angular distribution defined by the angular-selective optical element 34. The angular-selective optical element 34 may, for example, comprise an angular-selective optical metal interference filter.

In order to allow illuminating the object 12 and measuring the reflected light wave at the same time, the device 10 comprises a beam splitter 36 arranged between the illumination light source 28 and the object 12. The beam splitter 36 is adapted to transmit at least partly the illumination light from the illumination light source 28 towards the object 12 and to reflect the light wave reflected from the surface 12a towards the imaging assembly 14. According to the presented embodiment, the optical axis of the illumination light source 28 and the optical axis of the imaging assembly 14 are oriented under an angle of 90° with respect to each other and the beam splitter 36 is arranged at a 45° angle in between.

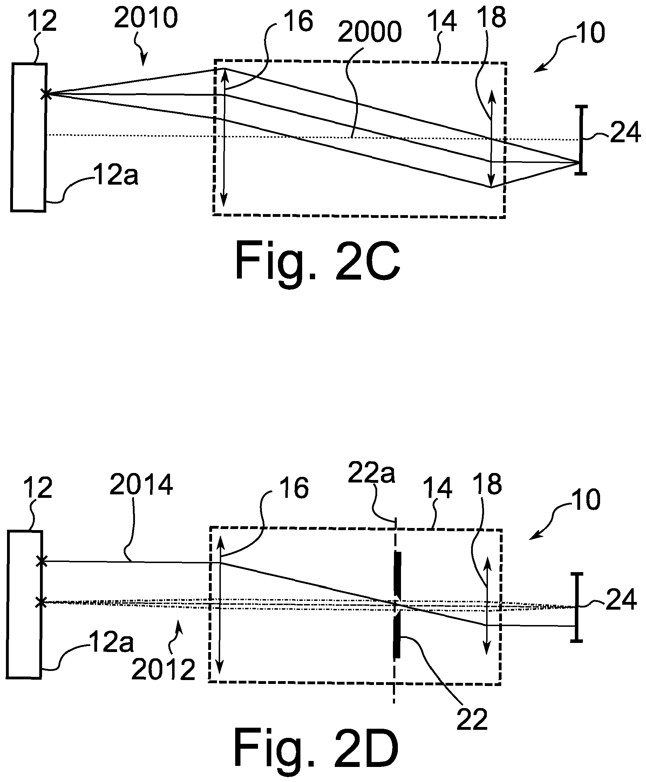

Moreover, the device 10 comprises a control unit 38, which exhibits one or more communication connections with the detector 24, the movable pinhole aperture 22 and the illumination light source 28. The control unit 38 according to the presented embodiment is configured to arrange the pinhole aperture 22 consecutively at multiple predetermined positions in the pinhole plane, as well as to receive the detector signal data for each of the consecutive positions of the pinhole aperture 22 in the pinhole plane. The control unit 38 may then derive the surface profile of the surface 12a of the object 12 based on the detector signal data and the corresponding predetermined positions of the pinhole aperture 22 in the pinhole plane 22a (see Figure 2D), which correspond to respective light waves having different angular ranges of the light waves reflected off the surface 12a.

The boundary lines 1000 and 1002 indicate a visualization of the boundaries of light waves transmitted through and collected by the device 10. As such, the boundary lines 1000 and 1002 indicate the maximum area of the surface 12a to be measured with the device 10 in one configuration, i.e. without moving the object 12 with respect to the device 10 or vice versa.

Line 1004 indicates an arbitrary light ray being part of the illumination light and visualizing a beam path through the illumination light source 28, the beam splitter 36, the reflection off the surface 12a, the deflection by the beam splitter 36 and the imaging to the detector 24 by the imaging assembly 14. The exemplarily presented light ray is emitted at such an angle by the illumination light source 28 that it satisfies an angular condition, i.e. its wave vector is in a suitable angular range, to be transmitted through the pinhole aperture 22 in the pinhole plane 24, while many other light rays (not shown) being emitted and/or reflected at a different angle from the surface 12a may not satisfy this angular condition and consequently are blocked by the pinhole aperture 22. Thus, the pinhole aperture 22 and its position in the pinhole plane allow selecting light rays emitted and/or reflected in a predetermined specific angular range and, hence, to isolate a predetermined specific range of plane wavefronts from the continuum of plane wavefronts provided as illumination light.

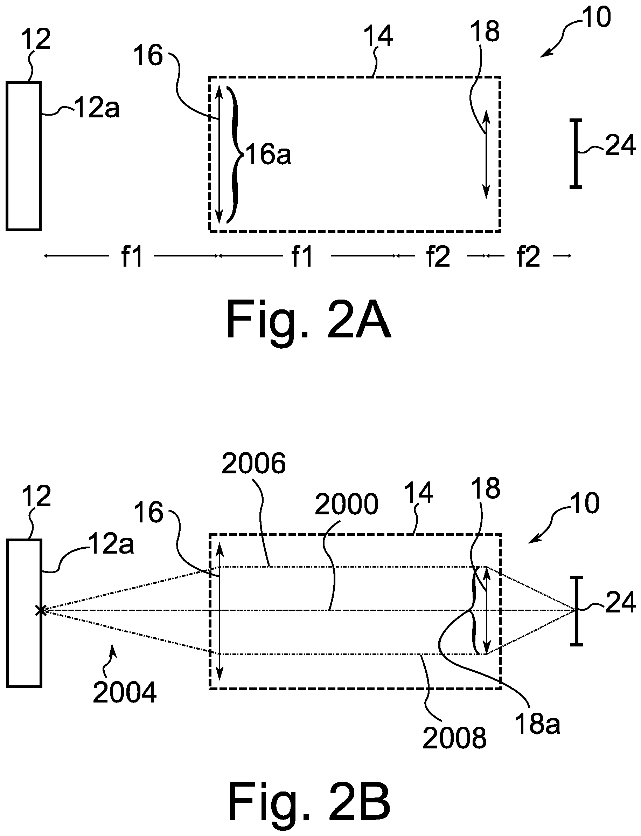

A more detailed illustration of the working principle of the device and a method for characterizing a wavefront emitted and/or reflected from an object 12 is presented in the following with reference to Figures 2A to 2F. These figures present a simplified schematic illustration of the device 10 discussed above with reference to Figure 1, wherein the illumination of the object 12 is omitted. Accordingly, the illumination light source 28 and the beam splitter 36 are not shown in Figures 2A to 2F. However, it is understood by a person skilled in the art that the working principle may be applied to measuring light waves emitted and reflected from the surface 12a alike.

Figure 2A identifies the components of the device 10 and illustrates their relative arrangement. As explained with reference to Figure 1 above, the device 10 comprises an imaging assembly 14 comprising a first lens 16 and a second lens 18. The device 10 further comprises a detector 24. The object 12 having a surface 12a is illustrated on the left-hand side.

The first lens 16 has an aperture 16a having at least the same extension as the area of the surface 12a to be measured. The first lens 16 further has a first focal length f1 and the second lens 18 has a second focal length f2. The imaging assembly 14 is arranged such that the first lens 16 is arranged at a working distance from the surface 12a which equals the first focal length f1. The distance between the first lens 16 and the second lens 18 equals the sum of the first focal length f1 and the second focal length f2. The detector 24 is arranged behind the imaging assembly 14 at a detecting distance from the second lens 18 which equals the second focal length f2. Furthermore, a pinhole aperture may be introduced in the common focal plane of the first lens 16 and the second lens 18 (see Figure 2D). Accordingly, the device 10 is configured and arranged to satisfy a bilateral telecentricity condition.

Figure 2B illustrates that not all light rays collected by the first lens 16 will be transmitted through the second lens 18. However, as illustrated in Figure 2B, all light rays that are transmitted also through the second lens 18 and originating in the same point on the surface 12a will be focused to the same point at the detector 24. The boundary lines 2006 and 2008 in Figure 2B indicate the boundary rays, which can be collected and imaged by the imaging assembly 14. It is apparent from the boundary rays 2006 and 2008 that the aperture 18a of the second lens 18 limits the total numerical aperture of the imaging assembly 14. Even if the first lens 16 could collect further light rays having a larger angle with respect to the optical axis 2000 than the boundary light rays 2006 and 2008, they would not be transmitted through the second lens 18.

Figure 2C depicts the light rays 2010 originating in a different point on the surface 12a. Also all light rays 2010, which originate in this point and are within an angular range, i.e. an angular cone, with respect to the optical axis 2000 to be imaged by the imaging assembly 14 are focused onto the same spot at the detector 24. Hence, all light rays originating in the same point on the surface 12a and being imaged by the imaging assembly 14 are focused onto the same point at the detector 24.

So far, the angular acceptance range of the imaging assembly 14 is very large, as all light rays originating in different points on the surface 12a in a large angular cone are collected and imaged by the imaging assembly 14. The detector signal data retrieved by the detector 24 does not allow a differentiation between different angles of the imaged light rays with respect to the optical axis 2000.

Angular information can, however, be retrieved by using the pinhole aperture 22. Figure 2D depicts the device 10 having a pinhole aperture 22 inserted in a pinhole plane 22a indicated by a dotted line. According to the presented embodiment the pinhole plane 22a overlaps with the common focal plane 20 (see Figure 1). The pinhole aperture 22 is movable and may be arranged at multiple different positions in the pinhole plane 22a, wherein each of the different positions corresponds to a different angular range of the light waves imaged to the detector 24 by the imaging assembly. According to the configuration presented in Figure 2D, the pinhole aperture 22 is arranged at a position intersecting with the optical axis 2000 of the imaging assembly 14, i.e. in a centered position. The center light rays 2012 represent the boundary light rays of a cone of light rays originating in a point at the surface 12a of the object 12, which are able to pass the pinhole aperture 22, while light rays originating in the same point at the surface 12a having a larger angle with respect to the optical axis 2000 are blocked by the pinhole aperture 22.

Compared to the light rays 2004 originating in the very same point at the surface 12a shown in Figure 2B, the light cone is significantly smaller and, thus, the smaller angular range transmitted through the pinhole aperture 22 results in a significant limitation of the angular range imaged to the detector 24. This not only applies to light rays originating in a point at the surface 12a intersecting the optical axis 2000. As visualized by the light ray 2014 at a different point at the surface 12a in an outer region of the surface 12a, the same applies to light rays originating in off-axis points of the surface 12a. Consequently, the pinhole aperture 22 located at a specific position in the pinhole plane 22a in or close to the common focal plane 20 allows adjusting the angle or angular range of the light waves to be imaged by the imaging assembly 14 to the detector 24.

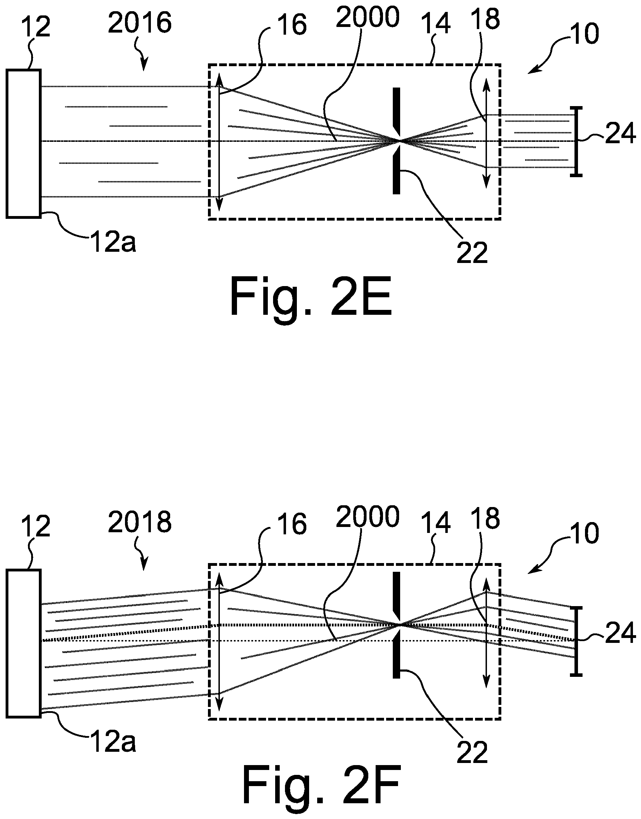

Figure 2E further illustrates the case in which the pinhole aperture 22 is arranged in a centered position at the optical axis 2000 resulting in all light rays 2016 parallel to the optical axis 2000 originating in all points of the measured surface 12a being transmitted and imaged by the imaging assembly 14 onto the detector 24. Each point at the surface 12a is imaged to a corresponding point at the detector 24. The light rays 2016 represent a light wave having a plane wavefront perpendicular to the optical axis 2000. Hence, when arranging the pinhole aperture 22 in a centered position at the optical axis 2000, the detector 24 will receive a maximum signal at these points, which represent an image of points at the surface 12a emitting (or reflecting) a light ray parallel to the optical axis 2000 given that the illumination light has its maximum intensity at 0° with respect to the emission axis. From this detector signal data the surface profile of the surface 12a at these points may be derived. For instance, when illuminated with illumination light having a plane wavefront propagating parallel to the surface normal of the surface 12a, the sensor signal data may indicate that the surface 12a is perpendicular to the optical axis 2000 at the points in which the light rays result in a maximized signal.

Figure 2F depicts a case in which the pinhole aperture 22 is arranged in a position further apart from the optical axis 2000. In this position, the pinhole aperture 22 transmits only such light waves 2018, which propagate at an angle different from 0° with respect to the optical axis 2000, for instance at an angle of 5°. This corresponds to a plane wavefront propagating at said angle of 5°. Only for this wavefront propagating at said angle and, depending on the size of an opening of the pinhole aperture corresponding to an angular range around said propagation direction, the light rays 2018 are transmitted and imaged by the imaging assembly 14 to the detector 24. Consequently, in this arrangement of the pinhole aperture 22, those points of the surface 12a will provoke a maximum signal at the detector 24, which emit (or reflect) the light rays at the given angle with respect to the optical axis 2000, given that the illumination light has its maximum intensity at 0° with respect to the emission axis.

Hence, a specific propagation angle or angular range can be attributed to each specific position of the pinhole aperture 22 in the pinhole plane 22a. In the same manner, a specific propagation angle or angular range can be attributed to each of the multiple positions of the pinhole aperture 22 in the pinhole plane 22a. Consequently, by arranging the pinhole aperture 22 at different positions in the pinhole plane 22a an angular selectivity of the signal measured by the detector 24 can be achieved. This allows measuring the angular distribution of the light waves reflected off the surface 12a and, hence, allows characterizing a surface profile of the surface 12a of the object 12, given that the illumination light has its maximum intensity at a known angle with respect to the emission axis.

For retrieving detailed information on the wavefront and/or the surface profile of the surface 12a, a detailed angular resolution may be achieved by arranging the pinhole aperture 22 in multiple specific and predetermined positions in the pinhole plane 22a and, thus, isolate collimate light waves having different angular ranges from the light waves reflected off the surface 12a.

In the following an exemplary process for characterizing a surface 12a and in particular deriving a surface profile of the surface 12a based on the detector signal data and the respective different angular ranges of the consecutively isolated collimated light waves based on the multiple positions of the pinhole aperture 22 und the pinhole plane 22a is schematically described for one point at the surface 12a.

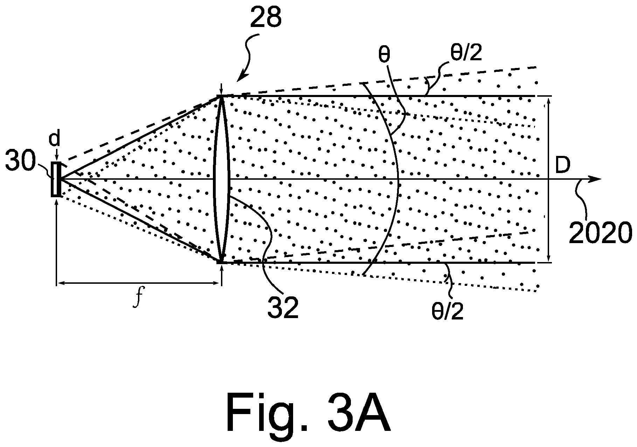

Figure 3A schematically depicts an illumination light source 28 having a light emitter 30 and a collimating lens assembly 32. The light emitter 30 has a lateral extension d perpendicular to the emission axis 2020. The collimating lens assembly 32 comprises a lens having a focal length f, a clear aperture D and is arranged along the emission axis 2020 at a distance equal to its focal length f. Due to the light emitter 30 having a lateral extension d, the collimated light waves behind the collimating lens assembly 32 have a divergence with respect to the emission axis 2020. The full divergence angle is indicated as Θ and the half divergence angle as O/2. The maximum divergence angle may be calculated from the radius r of the light emitter 30, which corresponds to d/2 and the focal length f of the collimating lens assembly 32:

$$\theta = 2 \cdot \arctan(\frac{r}{f})$$

The maximum divergence angle Θ is a measure for the degree of collimation.

According to the disclosure, the maximum divergence angle Θ of the illumination light source 28 shall be larger than the maximum acceptance angle of the imaging assembly 14.

As described above, the illumination light source 28 is adapted to offer a specific relation between the emission intensity and the divergence angle, i.e. between the angular distribution of the emitted collimated light waves and their intensity. This may be achieved with an angular selective optical filter, such as an interference filter, which offers a transmissivity decreasing for increasing divergence angles.

In the discussed example, the collimating lens assembly 32 is assumed to have a focal length f of 100 mm, the full divergence angle Θ is assumed to be 2°, the radius r of the lateral extension d of the light emitter 30 is assumed to be 1,75 mm and the angular selective optical element is chosen to have a transmissivity decreasing with increasing divergence following the mathematical function $1.000^{-|\alpha|3}$, wherein $\alpha$ indicates the propagation angle of the light wave with respect to the optical axis of the angular selective optical element.

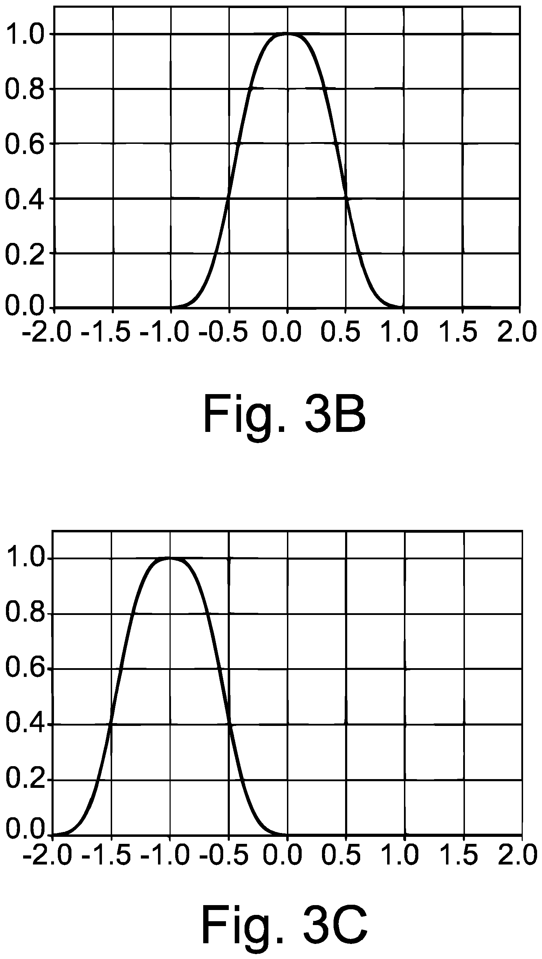

Figure 3B schematically indicates the intensity of the illumination light impinging on an arbitrary point of the surface 12a in dependence of the angle. The horizontal axis indicates the angle in degree and the vertical axis the normalized relative intensity. As can be seen, the angular intensity distribution has its maximum value at an angle of zero degree with respect to the emission axis 2020 and the intensity decreases for angles deviating from the emission axis 2020 reaching zero at about +1° and -1°.

Characterizing the surface includes characterizing the angular slope of the surface at each points on the surface 12a to be characterized. Accordingly, the slope is to be determined. The relative intensity of the light reflected off a specific point on the surface 12a strongly depends on the slope of the surface 12a at said point, which, hence, changes the relative angular intensity distribution as shown in Figure 3C. In Figure 3C also the horizontal axis indicates the angle in degree and the vertical axis indicates the normalized relative intensity. In contrast to the impinging intensity of the illumination light, as shown in Figure 3B, the maximum intensity of the reflected light is at an angle of about -1 ° and drops to zero at about -2° and 0°.

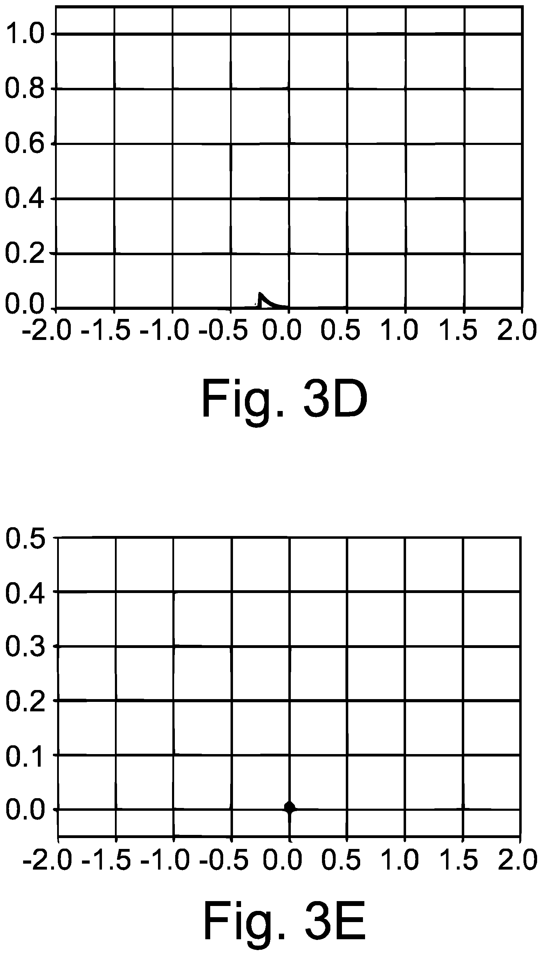

The reflected light wave is collected by the imaging assembly 14 and imaged to the detector 24. The light wave reflected off each specific point at the surface 12a is imaged to a specific point at the detector 24. As the acceptance angle of the imaging assembly 14 is smaller than the full divergence angle Θ of the illumination light source 28 including the angular selective optical element, only light waves of a smaller angular range are imaged by the imaging assembly 14 to the detector 24. The imaging assembly 14 may have a pinhole aperture 22 providing an acceptance angle of 0,5°. When the pinhole aperture 22 is positioned at a center position at the optical axis of the imaging assembly 14, the intensity of the reflected light wave outside an angular range from -0,25° to +0,25° is blocked by the pinhole aperture 14. The intensity of the light wave after the pinhole aperture 22 is depicted in Figure 3D, wherein the horizontal axis indicates the angle in degree and the vertical intensity the relative intensity. As can be seen, the transmitted intensity is very low compared to the total intensity of the light wave reflected at the specific point of the surface 12a (see Figure 3C). The pixel of the detector 24 detecting said imaged light wave transmitted through the pinhole aperture 22 integrates the detected light wave and, thus, provides a detector signal data for said pixel being proportional to the area under the graph in Figure 3D. In the presented case this corresponds to a value of 0,0039 for the detector signal data. This value can be plotted in a respective graph, as shown in Figure 3E, which indicates the angle in degree at the horizontal axis and the relative (integrated) intensity of the detector signal data at the vertical axis. The angle can be converted in a lateral displacement of the pinhole aperture 22 in millimeters.

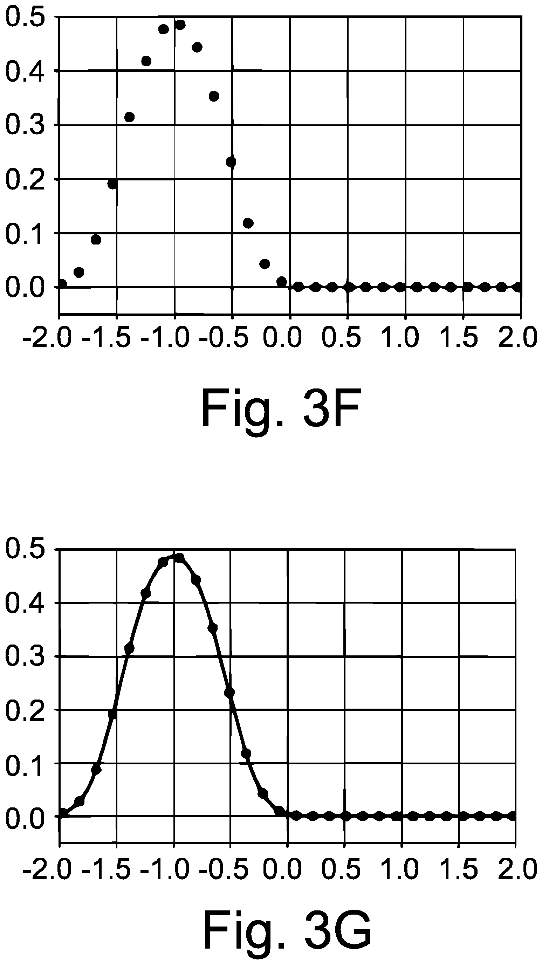

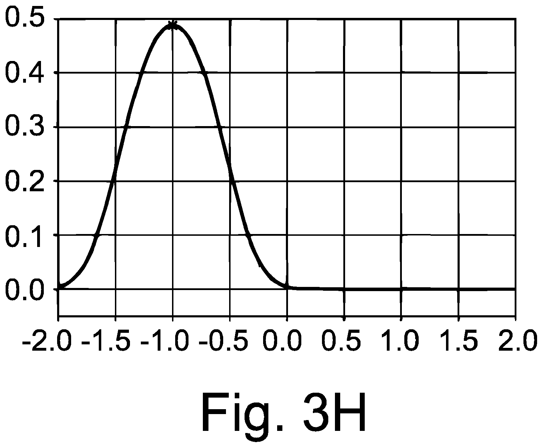

The pinhole aperture 22 may then be consecutively arranged at multiple different positions in the pinhole plane 22a and respective detector signal data may be taken for the very same pixel (and every other pixel likewise) at each of the multiple positions. According to the presented example, all positions are located along one dimension. Each position of the pinhole aperture 22 in the pinhole plane 22a corresponds to a specific angular range of the light wave reflected off the surface 12a. As the size of the pinhole aperture 22 remains constant, the acceptance angle also stays constant. However, for the different positions the transmitted angular range varies. This allows measuring the transmitted intensity for multiple different angular ranges by arranging the pinhole aperture 22 at multiple different positions, as shown in Figure 3F. Again, the horizontal axis indicates the angle in degree and the vertical axis the relative (integrated) intensity of the detector signal data. These data points can be interpolated, as shown in Figure 3G and the maximum may be determined, as depicted in Figure 3H.

In the presented case, the interpolation and determination of the maximum results in a determined angle of -1 ,0012247793339475°, which corresponds to a slope of the surface 12a at the characterized point of half of the angle, which is about - 0,5006° at a preset value of 0,5°. The deviation between the measured value and the present value may be reduced by using a larger number of interpolation points. The interpolation function does not use the original function (intensity over angle) but merely requires that there is a maximum. The maximum shall be well pronounced, for which the angular selective optical element is used. With a more complex interpolation the function "intensity over angle" may support the interpolation function.

The presented simplified explanation relates to one single measurement point and one sensor pixel in one dimension. The method may be carried out for all measurement points at the surface 12a and all sensor pixels for both dimensions X and Y. From the slopes X and Y for all measurement points the surface profile of the surface 12a can be derived.

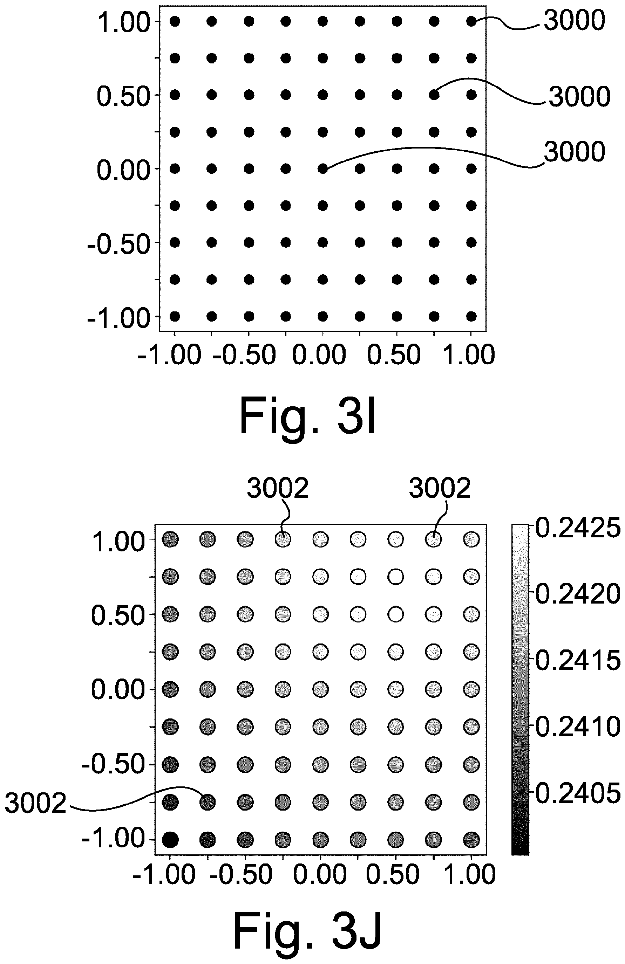

Figure 3I schematically shows an exemplary grid-like layout of multiple positions 3000 in the pinhole plane 22a, at which the pinhole aperture 22 may be arranged during the characterization of the surface 12a. According to an optional embodiment, the pinhole aperture 22 may be consecutively arranged in all of the multiple positions 3000 defined in the layout. The positions 3000 of the layout are all arranged in the pinhole plane 22a. The numbers given on the axes are provided in arbitrary units, wherein the +1 and -1 may relate to the maximum deflection from the optical axis, while the position 3000 at the coordinates (0;0) may be located at the optical axis of the imaging assembly 14. However, also other configurations of arrangements are possible. Other configurations may for instance vary in terms of number, pattern and/or spacing of the defined positions. Moreover, the pattern does not necessarily be regular and/or symmetric. It may be sufficient to provide the positions 3000 in a well-known manner. The spacing of the positions 3000 may vary depending on the size of an opening of the pinhole aperture 22 and the numeric aperture of the imaging assembly 14.

Figure 3J illustrates the positions of the pinhole aperture 22 of Figure 3A together with a measure of the signal intensity obtained for an arbitrary pixel of the detector 24, which represents a point in the image plane of the imaging assembly 14. The intensity information is coded in a relative brightness of the spots 3002, wherein brighter spots indicate a higher signal strength than darker spots. On the righthand side a signal strength scale is provided in arbitrary units. A measurement may comprise arranging the pinhole aperture 22 in each of the predetermined positions 3000 and registering the signal strength of each of the detector's 24 multiple pixels. Thus, for each of the pixels an information corresponding to the signal strength map as shown in Figure 3J may be retrieved.

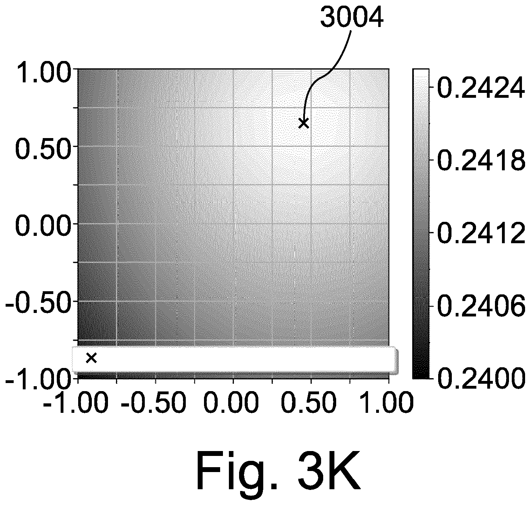

The retrieved values for the signal strength may be interpolated (as described above) to achieve a continuous function of the signal strength distribution, as exemplarily shown in Figure 3K. This may facilitate determining the maximum of the signal strength detected for the respective pixels among all the signals measured at different pinhole positions 3000. The position of the determined maximum 3004 then provides the information, at which of the pinhole positions 3000 the respective pixel or point at the detector 24 has its maximum signal intensity, which allows calculating the propagation angle of the light wave originating the correlated point in the object plane, i.e. at the surface 12a. This determination can be carried out for each pixel of the detector 24 independently based on only one measurement run, in which the pinhole aperture 22 is arranged in each position 3000 only once. Needless to say that several measurement runs and averaging may be carried out for improving a quality of the obtained signal and information.

Based on the determined angular distribution of the light waves and knowing the angular distribution of the illumination light, the surface profile of the surface 12a can be characterized. As is understood by a person skilled in the art, any intermediate steps for calculating a propagation direction of light rays and any kind of visualization may be omitted for obtaining the desired result, which may be the characterization of a wavefront of a light wave emitted and/or reflected by the surface 12a and/or the characterization of the surface profile of the surface 12a. The intermediate steps merely have been presented to explain the working principle of a method for characterizing the surface 12a an object 12.

## List of reference signs

| | |
|---|---|
| 10 | device for characterizing a wavefront |
| 12 | object |
| 12a | surface of the object |
| 14 | imaging assembly |
| 16 | first lens |
| 16a | aperture of first lens |
| 18 | second lens |
| 18a | aperture of second lens |
| 20 | common focal plane of first lens and second lens |
| 22 | pinhole aperture |

22a　　　　pinhole plane
24　　　　　detector
26　　　　　optical filter element
28　　　　　illumination light source
30　　　　　light emitter
32　　　　　collimating lens assembly
34　　　　　angular-selective optical element
36　　　　　beam splitter
38　　　　　control unit

f1　　first focal length
f2　　second focal length

1000, 1002　　boundary lines
1004　　　　　light ray, light wave
2000　　　　　optical axis of imaging assembly
2002　　　　　spherical light wave
2004　　　　　wave vectors
2006, 2008　　boundary lines
2010 - 2018　　light rays
2020　　　　　emission axis
3000　　　　　position of pinhole (in patter of positions)
3002　　　　　spots indicating signal strength
3004　　　　　maximum of signal strength

**Claims**

1. Method for characterizing a surface (12a) of an object (12), the method comprising:

   - illuminating the surface (12a) of the object (12) with a predetermined illumination light, wherein the illumination light comprises a predetermined angular distribution of collimated light waves;
   - collecting the light waves reflected off the surface (12a) with an imaging assembly (14);
   - consecutively isolating collimated light waves having different angular ranges from the light waves reflected off the surface (12a), wherein the light waves having different angular ranges are isolated in a sequential manner;
   - detecting the isolated light waves and providing detector signal data for each of the consecutively isolated light waves with a detector (24) arranged at a detecting distance from the imaging assembly (14); and
   - deriving a surface profile of the surface (12a) based on the detector signal data and the respective different angular ranges of the consecutively isolated collimated light waves.

2. Method according to claim 1, wherein the predetermined angular distribution of collimated light waves of the illumination light has its maximum intensity at a propagation angle parallel to an optical axis of an illumination light source.

3. Method according to claim 1 or 2, wherein the imaging assembly (14) is adapted to image the surface (12a) of the object (12) to the detector (24).

4. Method according to any one the preceding claims, wherein

   - the imaging assembly (14) comprises or is configured as an imaging lens assembly with a first lens (16) having a first focal length (f1) and a second lens (18) having a second focal length (f2), wherein the first lens (16) and the second lens (18) share a common focal plane (20) within the imaging lens assembly,
   - a pinhole aperture (22) is provided for consecutively isolating the collimated light waves having different angular ranges from the light waves reflected off the surface (12a), wherein the pinhole aperture (22) is arranged in a pinhole plane (22a), wherein the pinhole plane (22a) is overlapping with or adjacent to the common focal plane (20);
   - the imaging assembly (14) is arranged at a working distance of the first lens (16) from the surface (12a) of the object (12) essentially corresponding to the first focal length (f1) to collect the light waves reflected off the object (12);
   - consecutively isolating the collimated light waves having different angular ranges from the light waves reflected off the surface comprises arranging the pinhole aperture (22) consecutively at multiple predetermined positions (3000) in the pinhole plane (22a);
   - each of the predetermined pinhole positions (3000) corresponds to one of the isolated collimated light waves having different angular ranges.

5. Method according to any one of the preceding claims, wherein the detector (24) comprises a two-dimensional pixel array with multiple pixels and wherein the detector signal data comprise a detected signal intensity for at least some of the pixels of the two-dimensional pixel array.

6. Method according to claim 5, wherein deriving a surface profile of the surface comprises determining for each of the pixels of the two-dimensional pixel array the one position (3000) out of the multiple predetermined positions (3000) of the pinhole aperture (22) in the pinhole plane (22a) resulting in the maximum detected signal intensity for the respective pixel.

7. Method according to claim 6, further comprising deriving for each of the pixels an angle of the light wave reflected off the surface at a position corresponding to the respective pixel and/or an angle of the surface (12a) of the object (12) at the position corresponding to the respective pixel defined by the position of the pinhole aperture (22) in the pinhole plane (22a) resulting in the maximum detected signal intensity for the respective pixel.

8. Method according to claim 7, wherein at least the following steps are carried out simultaneously for at least some and optionally for all pixels:

> - determining for each of the pixels the one position (3000) out of the multiple positions (3000) of the pinhole aperture (22) in the pinhole plane (22a) resulting in the maximum detected signal intensity for the respective pixel; and
> - deriving for each of the pixels an angle of the light wave reflected off the object (12) at a position corresponding to the respective pixel and/or an angle of the surface (12a) of the object (12) at the position corresponding to the respective pixel defined by the position of the pinhole aperture (22) in the pinhole plane (22a) resulting in the maximum detected signal intensity for the respective pixel.

9. Method according to any one of claims 1 to 3, wherein the step of consecutively isolating collimated light waves having different angular ranges from the light waves reflected off the surface (12a) comprises one or more of the following:

> - rotating and/or turning the object (12) with respect to the imaging assembly (14);
> - varying the predetermined angular distribution of the collimated light waves of the illumination light, such that an angle of a maximum intensity of the illumination light is varied;
> - varying a position of an illumination light source (28) providing the illumination light with respect to the surface (12a);
> - varying a position of the imaging assembly (14) with respect to the surface (12a); and
> - varying a position and/or an orientation of an optical component guiding the illumination light onto the surface (12a) with respect to the surface (12a).

10. Device (10) for characterizing a surface (12a) of an object (12), the device (10) comprising:

> - an illumination light source (28) adapted to illuminate the surface (12a) of the object (12) with a predetermined illumination light, wherein the illumination light comprises a predetermined angular distribution of collimated light waves;
> - an imaging assembly (14) adapted to collect the light waves reflected off the surface (12a);
> - means for consecutively isolating collimated light waves having different angular ranges from the light waves reflected off the surface (12a);
> - a detector (24) arranged at a detecting distance from the imaging assembly (14), wherein the detector (24) is adapted to detect the isolated light waves and to provide detector signal data for each of the consecutively isolated light waves, wherein the light waves having different angular ranges are isolated in a sequential manner; and
> - a control unit (38) adapted to derive a surface profile of the surface (12a) based on the detector signal data and the respective different angular ranges of the consecutively isolated collimated light waves.

11. Device (10) according to claim 10, wherein the illumination light source (28) comprises an angular selective optical element (34) having an angular selective optical transmission.

12. Device (10) according to claim 11, wherein the angular selective optical transmission has its maximum at a transmission angle being parallel to the optical axis of the angular selective optical element (34).

13. Device (10) according to any one of claims 10 to 12, wherein:

> - the imaging assembly (14) comprises or is configured as an imaging lens assembly with a first lens (16) having a first focal length (f1) and a second lens (18) having a second focal length (f2), wherein the first lens (16) and the second lens (18) share a common focal plane (20) within the imaging lens assembly and wherein the imaging lens assembly is adapted to collect light waves reflected off the surface at a working distance of the first lens (16) from the object (12) essentially corresponding to the first focal length (f1);
> - the means for consecutively isolating collimated light waves having different angular ranges comprise a pinhole aperture (22) arranged in a pinhole plane (22a), wherein the pinhole plane (22a) is overlapping with or adjacent to the common focal plane (20), wherein the pinhole aperture (22) is arrangeable at multiple predetermined positions (3000) in the pinhole plane (22a), wherein each of the predetermined positions corresponds to a predetermined angular range of one of the isolated collimated light waves;
> - the detector (24) is arranged at a detecting distance from the second lens (18) essentially corresponding to the second focal length (f2), wherein the detector (24) is configured to detect the light wave collected by the imaging lens assembly and to provide detector signal data; and
> - the control unit (38) is configured to:

- arrange the pinhole aperture (22) consecutively at multiple predetermined positions (3000) in the pinhole plane (22a);
- receive the detector signal data for each of the consecutive positions (3000) of the pinhole aperture (22) in the pinhole plane (22a); and
- derive a surface profile of the surface (12a) based on the detector signal data and the corresponding predetermined positions (3000) of the pinhole aperture (22) in the pinhole plane (22a).

14. Device (10) according to claim 13, wherein the imaging lens assembly (14) comprises or consists of a telecentric lens assembly.

15. Device (10) according to claim 13 or 14, wherein the extension of an opening of the pinhole aperture (22) in a direction within the pinhole plane (22a) is in a range from 1 μm to 1 mm, and/or

wherein the first lens (16) of the imaging lens assembly (14) has an aperture (16a) of at least 50 mm and/or not more than 500 mm, and/or wherein the detector (24) comprises a two-dimensional pixel array and wherein the two-dimensional pixel array is or comprises a CCD array and/or a CMOS array.

**Patentansprüche**

1. Verfahren zum Charakterisieren einer Oberfläche (12a) eines Objekts (12), wobei das Verfahren Folgendes umfasst:

- Beleuchten der Oberfläche (12a) des Objekts (12) mit einem vorbestimmten Beleuchtungslicht, wobei das Beleuchtungslicht eine vorbestimmte Winkelverteilung von kollimierten Lichtwellen umfasst;
- Sammeln der Lichtwellen, die von der Oberfläche (12a) zurückreflektiert wurden, mit einer Abbildungsbaugruppe (14);
- aufeinanderfolgendes Isolieren kollimierter Lichtwellen, die unterschiedliche Winkelbereiche aufweisen, aus den von der Oberfläche (12a) zurückreflektierten Lichtwellen, wobei die Lichtwellen, die unterschiedliche Winkelbereiche aufweisen, auf eine sequenzielle Art isoliert werden;
- Detektieren der isolierten Lichtwellen und Liefern von Detektorsignaldaten für jede der aufeinanderfolgend isolierten Lichtwellen mit einem Detektor (24), der bei einer Detektierdistanz von der Abbildungsbaugruppe (14) angeordnet ist; und

- Ableiten eines Oberflächenprofils der Oberfläche (12a) auf der Grundlage der Detektorsignaldaten und der jeweiligen unterschiedlichen Winkelbereiche der aufeinanderfolgend isolierten kollimierten Lichtwellen.

2. Verfahren nach Anspruch 1, wobei die vorbestimmte Winkelverteilung von kollimierten Lichtwellen des Beleuchtungslichts ihre Maximalintensität bei einem Fortpflanzungswinkel parallel zu einer optischen Achse einer Beleuchtungslichtquelle annimmt.

3. Verfahren nach Anspruch 1 oder 2, wobei die Abbildungsbaugruppe (14) eingerichtet ist zum Abbilden der Oberfläche (12a) des Objekts (12) auf den Detektor (24).

4. Verfahren nach einem der vorhergehenden Ansprüche, wobei

- die Abbildungsbaugruppe (14) eine Abbildungslinsenbaugruppe mit einer ersten Linse (16), die eine erste Brennweite (f1) aufweist, und einer zweiten Linse (18), die eine zweite Brennweite (f2) aufweist, umfasst oder eine solche ist, wobei sich die erste Linse (16) und die zweite Linse (18) eine gemeinsame Brennebene (20) innerhalb der Abbildungslinsenbaugruppe teilen,
- eine Lochblendenapertur (22) zum aufeinanderfolgenden Isolieren der kollimierten Lichtwellen, die unterschiedliche Winkelbereiche aufweisen, aus den von der Oberfläche (12a) zurückreflektierten Lichtwellen, vorgesehen ist, wobei die Lochblendenapertur (22) in einer Lochblendenebene (22a) angeordnet ist, wobei sich die Lochblendenebene (22a) mit der gemeinsamen Brennebene (20) überlappt oder an diese angrenzt;
- die Abbildungsbaugruppe (14) bei einer Arbeitsdistanz der ersten Linse (16) von der Oberfläche (12a) des Objekts (12) angeordnet ist, die grundsätzlich der ersten Brennweite (f1) entspricht, um die von dem Objekt (12) zurückreflektierten Lichtwellen einzusammeln;
- aufeinanderfolgendes Isolieren der kollimierten Lichtwellen, die unterschiedliche Winkelbereiche aufweisen, aus den von der Oberfläche zurückreflektierten Lichtwellen, Anordnen der Lochblendenapertur (22) aufeinanderfolgend an mehreren vorbestimmten Positionen (3000) in der Lochblendenebene (22a) umfasst;
- wobei jede der vorbestimmten Lochblendenpositionen (3000) einer der isolierten kollimierten Lichtwellen, die unterschiedliche Winkelbereiche aufweisen, entspricht.

5. Verfahren nach einem der vorhergehenden Ansprüche, wobei der Detektor (24) ein zweidimensionales Pixelarray mit mehreren Pixeln umfasst, und wobei die Detektorsignaldaten eine detektierte Signalintensität für mindestens einige der Pixel des zweidimensionalen Pixelarrays umfassen.

6. Verfahren nach Anspruch 5, wobei Ableiten eines Oberflächenprofils der Oberfläche Bestimmen, für jedes der Pixel des zweidimensionalen Pixelarrays, der einen Position (3000) aus den mehreren vorbestimmten Positionen (3000) der Lochblendenapertur (22) in der Lochblendenebene (22a), die zu der maximal detektierten Signalintensität für das jeweilige Pixel führt, umfasst.

7. Verfahren nach Anspruch 6, ferner umfassend Ableiten, für jedes der Pixel, eines Winkels der von der Oberfläche zurückreflektierten Lichtwelle an einer Position, die dem jeweiligen Pixel entspricht, und/oder eines Winkels von der Oberfläche (12a) des Objekts (12) an der Position, die dem jeweiligen Pixel entspricht, definiert durch die Position der Lochblendenapertur (22) in der Lochblendenebene (22a), was zu der maximal detektierten Signalintensität für das jeweilige Pixel führt.

8. Verfahren nach Anspruch 7, wobei mindestens die folgenden Schritte für zumindest einige, und optional alle, Pixel gleichzeitig ausgeführt werden sollen:

- Bestimmen, für jedes der Pixel, der einen Position (3000) aus den mehreren Positionen (3000) der Lochblendenapertur (22) in der Lochblendenebene (22a), die zu der maximal detektierten Signalintensität für das jeweilige Pixel führt; und
- Ableiten, für jedes der Pixel, eines Winkels der von dem Objekt (12) zurückreflektierten Lichtwelle an einer Position, die dem jeweiligen Pixel entspricht, und/oder eines Winkels von der Oberfläche (12a) des Objekts (12) an der Position, die dem jeweiligen Pixel entspricht, definiert durch die Position der Lochblendenapertur (22) in der Lochblendenebene (22a), was zu der maximal detektierten Signalintensität für das jeweilige Pixel führt.

9. Verfahren nach einem der Ansprüche 1 bis 3, wobei der Schritt von aufeinanderfolgendem Isolieren kollimierter Lichtwellen, die unterschiedliche Winkelbereiche aufweisen, aus den von der Oberfläche (12a) zurückreflektierten Lichtwellen einen oder mehrere der Folgenden umfasst:

- Rotieren und/oder Drehen des Objekts (12) relativ zu der Abbildungsbaugruppe (14);
- Variieren der vorbestimmten Winkelverteilung der kollimierten Lichtwellen des Beleuchtungslichts, so dass ein Winkel einer Maximalintensität des Beleuchtungslichts variiert wird;
- Variieren einer Position einer Beleuchtungslichtquelle (28), die das Beleuchtungslicht relativ zu der Oberfläche (12a) liefert;
- Variieren einer Position der Abbildungsbaugruppe (14) relativ zu der Oberfläche (12a); und
- Variieren einer Position und/oder einer Orientierung einer optischen Komponente, die das Beleuchtungslicht auf die Oberfläche (12a) leitet, relativ zu der Oberfläche (12a).

10. Vorrichtung (10) zum Charakterisieren einer Oberfläche (12a) eines Objekts (12), wobei die Vorrichtung (10) Folgendes umfasst:

- eine Beleuchtungslichtquelle (28), ausgestaltet zum Beleuchten der Oberfläche (12a) des Objekts (12) mit einem vorbestimmten Beleuchtungslicht, wobei das Beleuchtungslicht eine vorbestimmte Winkelverteilung von kollimierten Lichtwellen umfasst;
- eine Abbildungsbaugruppe (14), ausgestaltet zum Sammeln der von der Oberfläche (12a) zurückreflektierten Lichtwellen;
- ein Mittel zum aufeinanderfolgenden Isolieren kollimierter Lichtwellen, die unterschiedliche Winkelbereiche aufweisen, aus den von der Oberfläche (12a) zurückreflektierten Lichtwellen;
- einen Detektor (24), angeordnet in einer Detektierdistanz von der Abbildungsbaugruppe (14), wobei der Detektor (24) ausgestaltet ist zum Detektieren der isolierten Lichtwellen und zum Liefern von Detektorsignaldaten für jede der aufeinanderfolgend isolierten Lichtwellen, wobei die Lichtwellen, die unterschiedliche Winkelbereiche aufweisen, auf eine sequenzielle Art isoliert werden; und
- eine Steuereinheit (38), ausgestaltet zum Ableiten eines Oberflächenprofils der Oberfläche (12a) auf der Grundlage der Detektorsignaldaten und der jeweiligen unterschiedlichen Winkelbereiche der aufeinanderfolgend isolierten kollimierten Lichtwellen.

11. Vorrichtung (10) nach Anspruch 10, wobei die Beleuchtungslichtquelle (28) ein winkelselektives optisches Element (34), das eine winkelselektive optische Transmission aufweist, umfasst.

12. Vorrichtung (10) nach Anspruch 11, wobei die winkelselektive optische Transmission ihr Maximum bei einem Transmissionswinkel annimmt, der parallel zu der optischen Achse des winkelselektiven optischen Elements (34) ist.

13. Vorrichtung (10) nach einem der Ansprüche 10 bis 12, wobei:

- die Abbildungsbaugruppe (14) eine Abbildungslinsenbaugruppe mit einer ersten Linse (16), die eine erste Brennweite (f1) aufweist, und einer zweiten Linse (18), die eine zweite Brennweite (f2) aufweist, umfasst oder eine solche ist, wobei sich die erste Linse (16) und die zweite Linse (18) eine gemeinsame Brennebene (20) innerhalb der Abbildungslinsenbaugruppe teilen, und wobei die Abbildungslinsenbaugruppe ausgestaltet ist zum Sammeln von Lichtwellen, die von der Oberfläche zurückreflektiert werden, bei einer Arbeitsdistanz der ersten Linse (16) von dem Objekt (12), die grundsätzlich der ersten Brennweite (f1) entspricht;
- wobei das Mittel zum aufeinanderfolgenden Isolieren kollimierter Lichtwellen, die unterschiedliche Winkelbereiche aufweisen, eine Lochblendenapertur (22), angeordnet in einer Lochblendenebene (22a), umfasst, wobei sich die Lochblendenebene (22a) mit der gemeinsamen Brennebene (20) überlappt oder an diese angrenzt, wobei die Lochblendenapertur (22) an mehreren vorbestimmten Positionen (3000) in der Lochblendenebene (22a) anordnungsbar ist, wobei jede der vorbestimmten Positionen einem vorbestimmten Winkelbereich von einer der isolierten kollimierten Lichtwellen entspricht;
- wobei der Detektor (24) bei einer Detektierdistanz von der zweiten Linse (18), die grundsätzlich der zweiten Brennweite (f2) entspricht, angeordnet ist, wobei der Detektor (24) ausgelegt ist zum Detektieren der Lichtwelle, gesammelt durch die Abbildungslinsenbaugruppe, und zum Liefern von Detektorsignaldaten; und
- wobei die Steuereinheit (38) ausgelegt ist zum:

- Anordnen der Lochblendenapertur (22) aufeinanderfolgend an mehreren vorbestimmten Positionen (3000) in der Lochblendenebene (22a);
- Empfangen der Detektorsignaldaten für jede der aufeinanderfolgenden Positionen (3000) der Lochblendenapertur (22) in der Lochblendenebene (22a); und
- Ableiten eines Oberflächenprofils der Oberfläche (12a) auf der Grundlage der Detektorsignaldaten und der entsprechenden vorbestimmten Positionen (3000) der Lochblendenapertur (22) in der Lochblendenebene (22a).

14. Vorrichtung (10) nach Anspruch 13, wobei die Abbildungslinsenbaugruppe (14) eine Telezentrische-Linse-Baugruppe umfasst oder aus einer solchen besteht.

15. Vorrichtung (10) nach Anspruch 13 oder 14, wobei die Erstreckung einer Öffnung der Lochblendenapertur (22) in einer Richtung innerhalb der Lochblendenebene (22a) in einem Bereich von 1 $\mu$m bis 1 mm liegt, und/oder wobei die erste Linse (16) der Abbildungslinsenbaugruppe (14) eine Apertur (16a) von mindestens 50 mm und/oder nicht mehr als 500 mm aufweist, und/oder wobei der Detektor (24) ein zweidimensionales Pixelarray umfasst und wobei das zweidimensionale Pixelarray ein CCD-Array und/oder ein CMOS-Array ist oder ein solches umfasst.

**Revendications**

1. Procédé de caractérisation d'une surface (12a) d'un objet (12), le procédé comprenant les étapes suivantes :

- éclairer la surface (12a) de l'objet (12) avec une lumière d'éclairage prédéterminée, la lumière d'éclairage comprenant une distribution angulaire prédéterminée d'ondes lumineuses collimatées ;
- recueillir les ondes lumineuses réfléchies par la surface (12a) à l'aide d'un ensemble d'imagerie (14) ;
- isoler de manière consécutive les ondes lumineuses collimatées ayant des plages angulaires différentes des ondes lumineuses réfléchies sur la surface (12a), les ondes lumineuses ayant des plages angulaires différentes étant isolées de manière séquentielle ;
- détecter les ondes lumineuses isolées et fournir des données de signal de détecteur pour chacune des ondes lumineuses isolées de manière consécutive avec un détecteur (24) disposé à une distance de détection de l'ensemble d'imagerie (14) ; et
- déduire un profil de surface de la surface (12a) sur la base des données de signal de détecteur et des différentes plages angulaires respectives des ondes lumineuses collimatées isolées de manière consécutive.

2. Procédé selon la revendication 1, dans lequel la distribution angulaire prédéterminée des ondes lumineuses collimatées de la lumière d'éclairage présente son intensité maximale à un angle de propagation parallèle à un axe optique d'une source de lumière d'éclairage.

3. Procédé selon la revendication 1 ou la revendication 2, dans lequel l'ensemble d'imagerie (14) est adapté pour imager la surface (12a) de l'objet (12) sur le détecteur (24).

**4.** Procédé selon l'une quelconque des revendications précédentes, dans lequel :

- l'ensemble d'imagerie (14) comprend ou est configuré en tant qu'ensemble de lentilles d'imagerie avec une première lentille (16) ayant une première longueur focale (f1) et une deuxième lentille (18) ayant une deuxième longueur focale (f2), dans lequel la première lentille (16) et la deuxième lentille (18) partagent un plan focal commun (20) à l'intérieur de l'ensemble de lentilles d'imagerie,

- une ouverture en trou d'épingle (22) est pourvue pour isoler de manière consécutive les ondes lumineuses collimatées ayant des plages angulaires différentes des ondes lumineuses réfléchies par la surface (12a), l'ouverture en trou d'épingle (22) étant disposée dans un plan de trou d'épingle (22a), le plan de trou d'épingle (22a) se superposant ou étant adjacent au plan focal commun (20) ;

- l'ensemble d'imagerie (14) est disposé à une distance de travail de la première lentille (16) par rapport à la surface (12a) de l'objet (12) correspondant essentiellement à la première distance focale (f1) pour collecter les ondes lumineuses réfléchies par l'objet (12) ;

- isoler de manière consécutive les ondes lumineuses collimatées ayant des plages angulaires différentes des ondes lumineuses réfléchies par la surface comprend de disposer l'ouverture en trou d'épingle (22) de manière consécutive à de multiples positions prédéterminées (3000) dans le plan de trou d'épingle (22a) ;

- chacune des positions prédéterminées du trou d'épingle (3000) correspond à l'une des ondes lumineuses collimatées isolées ayant différentes plages angulaires.

**5.** Procédé selon l'une quelconque des revendications précédentes, dans lequel le détecteur (24) comprend une matrice bidimensionnelle de pixels comportant plusieurs pixels et dans lequel les données de signal de détecteur comprennent une intensité de signal détectée pour au moins certains des pixels de la matrice bidimensionnelle de pixels.

**6.** Procédé selon la revendication 5, dans lequel la dérivation d'un profil de surface de la surface comprend de déterminer, pour chacun des pixels de la matrice bidimensionnelle de pixels, la position (3000) parmi les multiples positions prédéterminées (3000) de l'ouverture en trou d'épingle (22) dans le plan de trou d'épingle (22a) résultant de l'intensité de signal détectée maximale pour le pixel respectif.

**7.** Procédé selon la revendication 6, comprenant en outre de déduire, pour chacun des pixels, un angle de l'onde lumineuse réfléchie par la surface à une position correspondant au pixel respectif et/ou un angle de la surface (12a) de l'objet (12) à la position correspondant au pixel respectif défini par la position de l'ouverture en trou d'épingle (22) dans le plan de trou d'épingle (22a) conduisant à l'intensité de signal détectée maximale pour le pixel respectif.

**8.** Procédé selon la revendication 7, dans lequel au moins les étapes suivantes sont réalisées simultanément pour au moins certains et éventuellement pour tous les pixels :

- déterminer, pour chacun des pixels, la position (3000) parmi les multiples positions (3000) de l'ouverture en trou d'épingle (22) dans le plan de trou d'épingle (22a) conduisant à l'intensité de signal détectée maximale pour le pixel respectif ; et

- déduire, pour chacun des pixels, un angle de l'onde lumineuse réfléchie par l'objet (12) à une position correspondant au pixel respectif et/ou un angle de la surface (12a) de l'objet (12) à la position correspondant au pixel respectif défini par la position de l'ouverture en trou d'épingle (22) dans le plan de trou d'épingle (22a) conduisant à l'intensité de signal détectée maximale pour le pixel respectif.

**9.** Procédé selon l'une quelconque des revendications 1 à 3, dans lequel l'étape comprenant d'isoler de manière consécutive les ondes lumineuses collimatées ayant des plages angulaires différentes des ondes lumineuses réfléchies par la surface (12a) comprend une ou plusieurs des étapes suivantes :

- faire tourner et/ou retourner l'objet (12) par rapport à l'ensemble d'imagerie (14) ;

- faire varier la distribution angulaire prédéterminée des ondes lumineuses collimatées de la lumière d'éclairage, de sorte qu'un angle d'intensité maximale de la lumière d'éclairage soit modifié ;

- faire varier la position d'une source de lumière d'éclairage (28) fournissant la lumière d'éclairage par rapport à la surface (12a) ;

- faire varier la position de l'ensemble d'imagerie (14) par rapport à la surface (12a) ; et

- faire varier la position et/ou l'orientation d'un composant optique guidant la lumière d'éclairage sur la surface (12a) par rapport à la surface (12a).

**10.** Dispositif (10) de caractérisation d'une surface (12a) d'un objet (12), le dispositif (10) comprenant :

- une source de lumière d'éclairage (28) adaptée pour éclairer la surface (12a) de l'objet (12) avec une lumière d'éclairage prédéterminée, où la lumière d'éclairage comprend une distribution angulaire prédéterminée d'ondes lumineuses collimatées ;

- un ensemble d'imagerie (14) adapté pour recueillir les ondes lumineuses réfléchies par la surface (12a) ;
- des moyens pour isoler de manière consécutive les ondes lumineuses collimatées ayant des plages angulaires différentes des ondes lumineuses réfléchies par la surface (12a) ;
- un détecteur (24) placé à une distance de détection de l'ensemble d'imagerie (14), où le détecteur (24) est adapté pour détecter les ondes lumineuses isolées et pour fournir des données de signal de détecteur pour chacune des ondes lumineuses isolées de manière consécutive, les ondes lumineuses ayant des plages angulaires différentes étant isolées de manière séquentielle ; et
- une unité de commande (38) adaptée pour déduire un profil de surface de la surface (12a) sur la base des données de signal de détecteur et des différentes plages angulaires respectives des ondes lumineuses collimatées isolées de manière consécutive.

11. Dispositif (10) selon la revendication 10, dans lequel la source de lumière d'éclairage (28) comprend un élément optique sélectif angulaire (34) ayant une transmission optique sélective angulaire.

12. Dispositif (10) selon la revendication 11, dans lequel la transmission optique sélective angulaire est maximale à un angle de transmission parallèle à l'axe optique de l'élément optique sélectif angulaire (34).

13. Dispositif (10) selon l'une quelconque des revendications 10 à 12, dans lequel :

- l'ensemble d'imagerie (14) comprend ou est configuré en tant qu'ensemble de lentilles d'imagerie avec une première lentille (16) ayant une première longueur focale (f1) et une deuxième lentille (18) ayant une deuxième longueur focale (f2), dans lequel la première lentille (16) et la deuxième lentille (18) partagent un plan focal commun (20) à l'intérieur de l'ensemble de lentilles d'imagerie et dans lequel l'ensemble de lentilles d'imagerie est adapté pour collecter les ondes lumineuses réfléchies par la surface à une distance de travail de la première lentille (16) par rapport à l'objet (12) correspondant essentiellement à la première longueur focale (f1) ;
- les moyens pour isoler de manière consécutive les ondes lumineuses collimatées ayant des plages angulaires différentes comprennent une ouverture en trou d'épingle (22) disposée dans un plan de trou d'épingle (22a), où le plan de trou d'épingle (22a) se superpose ou est adjacent au plan focal commun (20), où l'ouverture en trou d'épingle (22) peut être disposée à plusieurs positions prédéterminées (3000) dans le plan de trou d'épingle (22a), où chacune des positions prédéterminées correspond à une plage angulaire prédéterminée de l'une des ondes lumineuses collimatées isolées ;

- le détecteur (24) est disposé à une distance de détection de la deuxième lentille (18) correspondant essentiellement à la deuxième distance focale (f2), le détecteur (24) étant configuré pour détecter l'onde lumineuse recueillie par l'ensemble de lentilles d'imagerie et pour fournir des données de signal de détecteur ; et
- l'unité de commande (38) est configurée pour :

  - disposer l'ouverture en trou d'épingle (22) de manière consécutive à plusieurs positions prédéterminées (3000) dans le plan de trou d'épingle (22a) ;
  - recevoir les données de signal de détecteur pour chacune des positions consécutives (3000) de l'ouverture en trou d'épingle (22) dans le plan de trou d'épingle (22a) ; et
  - déduire un profil de surface de la surface (12a) sur la base des données de signal de détecteur et des positions prédéterminées correspondantes (3000) de l'ouverture en trou d'épingle (22) dans le plan de trou d'épingle (22a).

14. Dispositif (10) selon la revendication 13, dans lequel l'ensemble de lentilles d'imagerie (14) comprend ou consiste en un ensemble de lentilles télécentriques.

15. Dispositif (10) selon la revendication 13 ou la revendication 14, dans lequel l'extension d'une ouverture en trou d'épingle (22) dans une direction dans le plan de trou d'épingle (22a) est comprise entre 1 μm et 1 mm, et/ou dans lequel la première lentille (16) de l'ensemble de lentilles d'imagerie (14) a une ouverture (16a) d'au moins 50 mm et/ou d'au plus 500 mm, et/ou dans lequel le détecteur (24) comprend une matrice bidimensionnelle de pixels et dans lequel la matrice bidimensionnelle de pixels est ou comprend une matrice CCD et/ou une matrice CMOS.

Fig. 1

EP 4 246 087 B1

Fig. 2A

Fig. 2B

Fig. 2C

Fig. 2D

Fig. 2E

Fig. 2F

# Fig. 3A

Fig. 3B

Fig. 3C

Fig. 3D

Fig. 3E

Fig. 3F

Fig. 3G

Fig. 3H

Fig. 3I

Fig. 3J

Fig. 3K

**EP 4 246 087 B1**

**Patent documents cited in the description**

- US 2017016832 A1
- US 5991034 A

- DE 102011076946 A1